(19) Europäisches Patentamt

European Patent Office

Office européen des brevets

(11) EP 0 888 861 A1

(12) **EUROPEAN PATENT APPLICATION**
published in accordance with Art. 158(3) EPC

(43) Date of publication:
07.01.1999 Bulletin 1999/01

(21) Application number: 96940667.7

(22) Date of filing: 09.12.1996

(51) Int. Cl.⁶: **B29C 49/00**, B29C 49/08

(86) International application number:
PCT/ES96/00236

(87) International publication number:
WO 98/25752 (18.06.1998 Gazette 1998/24)

(84) Designated Contracting States:
BE DE ES FR GB IT PT

(71) Applicant:
**Schmalbach Lubeca Pet Containers Iberia, S.A.**
**28043 Madrid (ES)**

(72) Inventor:
**SUBIRA LOBERA, Francisco Roberto**
**E-28043 Madrid (ES)**

(74) Representative:
**Perez Bonal, Bernardo**
**Explanada 8**
**28040 Madrid (ES)**

(54) **PROCESS FOR OPTIMIZING PREFORMS, AND LIGHTENED PREFORMS THUS OBTAINED**

(57) The process is characterized by a better distribution of the material both in the neck region and in the preform body, giving a bi-stretching ratio of the order of or higher than 30% than the conventional ratio despite of the reduction of the preform weight, owing to a modication of the configuration of the polymer molecular network.

FIG. 2

EP 0 888 861 A1

## Description

OBJECT OF THE INVENTION

The invention which is herewith defended consists of an optimization procedure of preforms and of the thus obtained lightened preforms, from the injection procedures of plastic materials, preferably esters and, more specifically, polyethylene terephthalate (PET) for subsequent blowing of said preforms and the obtention with the same, of containers with various dimensions.

This invention is characterized by the optimization of the distribution of material both at the neck and at the body of the preform, reaching a perfection in its biorientation which makes possible a bidrawing rate which is much greater than the conventional one, in spite of the weight reduction of the preform, due to a modification of the configuration of the molecular lattice of the polymer.

BACKGROUND OF THE INVENTION

The containers of certain drinks, specially those of carbonic drinks, are constructed conventionally such as those of other multiple products, nutritive or not, based on injected and, subsequently blown preforms.

Said preforms are cylindrical bodies and are slightly frusto-conical, to facilitate their demolding, as well as providing their mouth threaded and with a diameter which is approximately that of the rest of the preform to be blown.

In the case of carbonic drinks, a critical factor is that of the gas tightness of the container, since this determines its commercial expiry date due to loss of a part of the carbon dissolved in the drink. Likewise, the bottle manufactured with PET with the appropriate characteristics shall resist satisfactorily, the internal pressure of the bottled liquid.

If to the tendency resulting from the above, to reinforce the weight of the preform by given dimensions, is added the problem generated by the difficulty of obtaining an optimum distribution of the material of the petal shaped base of the bottle, it is easy to deduce that we are far from having at present optimized preforms, as regards dimensions and weight.

To all the above must be added the growing current tendency of the packaging of enormous amounts of products which forces the separation, physically and in time, of the injection stages of the preform and of the blowing of the same, which requires a new and greater heating of the internal face of the same, prior to blowing, this being conducted with quartz lamps in which its thermal profile shall be adapted to the thickness of the preform, with the problem that the orientation in the expansion may result to be greater, the lower the temperature of the preform.

The applicant has no knowledge of the existence of PET preforms for containers of carbonic drinks, optimized in dimensions and weight, which couples a decrease of the same without a decrease of its mechanical strength properties or the increase of its carbonic gas tightness, based on an optimization of the biorientation of the molecular mesh of the PET, by the modification of the molecular lattice of the polymer.

DESCRIPTION OF THE INVENTION

The invention which is the object of the present Specification refers to preforms and to the optimization procedure of the same, which achieves a decrease in their weight without a reduction of quality and which makes possible not only a reduection of the environmental impact but also a considerable reduction of the production costs since, in that of the container, the cost of the material is, at least 80 % of the production of the same.

Diverse Communitary and European National legislation directives apply, related to the topics of health, packaging and recovery of containers which, in Spain, evolve towards a common European Standardization which makes mandatory not only a growing recovery and recycling of containers but also a reduction in the volume of production, which is something which affects the establishment of the present invention.

This optimization technique is applicable to the injection procedures of commercial thermoplastic materials, such as esters and more specifically, PET, for the obtention with the same, of containers with various dimensions, after an appropriate blowing of these preforms

Traditionally, it is considered and is so claimed previously, that an optimum bidrawing rate or molecular biorientation is that which reaches theoretical factor 10, even when in practice, it is more common to count with this factor in punctual manner in preform samplings, the average being 9.

This rate is obtained as a result of the product between the diametral ratio and the axial ratio, the former being the quotient between the diameter of the body of the bottle and the diameter of the preform in its neutral axis, that is to say, in the theoretical centre line of its thickness, whilst the latter is the result of the quotient between the half-perimeters of the body of the bottle and of the preform.

In the known containers of carbonic drinks with 2 l capacity, preforms of 54,5 g are injected and blown (which may reach a weight of up to 58,0 g), which are provided with a diametral ratio of 4 and another axial one of 2,5.

This invention is characterized by the optimization of the bidrawing rate to factor 13,44, based on the obtention of a diametral ration of 4,2 and an axial ratio of 3,2, obtaining a total preform weight of 52 g.

This rate, which is much greater than the conventional rate, comes from the increase of the drawing of the PET into two spacial directions, diametral and axial, which achieves a greater mechanical strength presented by the molecular lattice and a lesser gaseous tightness for one same thickness, making possible the weight reduction, without reducing the services, for a given preform.

## DESCRIPTION OF THE DRAWINGS

In order to complement the description which is being made and with the object of facilitating a better and easier understanding of the characteristics of the invention, the present Specification is enclosed, forming integral part of the same, with a set of drawings in which, with illustrative and never limitative character, the following has been represented:

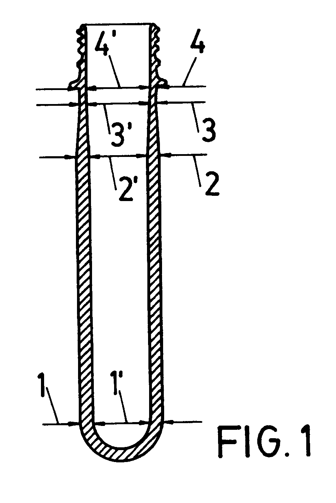

Figure 1 is a longitudinal cross section of the optimized preform.

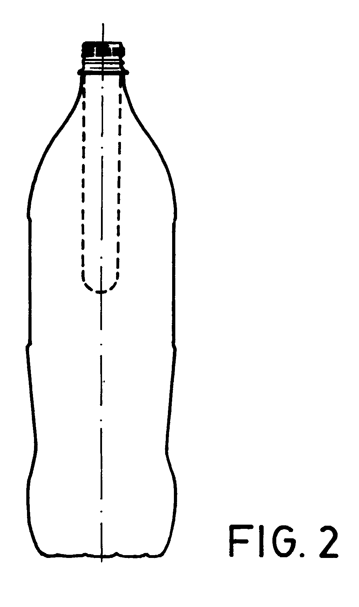

Figure 2 is a conventional image of an elevational cross section of a bottle for carbonic drinks, though showing the theoretical position of the preform, in stroked lines.

## PREFERRED EMBODIMENT OF THE INVENTION

In view of what has been previously indicated, the present invention refers to an optimization procedure of preforms and thus obtained lightened preforms, of the preforms injected in PET material, preferably that commercialized with an intrinsic viscosity of 0,80 +/- 0,02 which are blown for the obtention of containers, which is characterized by the joining a decrease in weight without a reduction of quality and makes possible not only a decrease of the environmental impact but also a considerable cost reduction, based on the increase of the conventional bidrawing rate of 10, which is obtained as a result of the product between the diametral ratio and the axial ratio, that is to say, the quotient between the diameter of the body of the bottle and the diameter of the preform in its neutral axis, by the quotient between the halfperimeters of the body of the bottle and the preform.

Example : The obtention of lightened containers of carbonic drinks of 2 l capacity, parting from preforms, with a conventional theoretical weight reduction of 54,5 g and the modification of its biorientation ratios, affecting the dimensioning of the molecular lattice of the PET of the container.

To such purposes, a diversity of preforms are available, all of them with the same mouth and modifying the dimensions both of the neck and of the body of the preform.

The objective is to document the theoretical provision of how the transformation of the lattice generated in the drawing-blowing of the preform progressively evolves from the model of the general rectangular configuration to another of more squared appearance, thus compensating the weight deficit with this new structuring of the polymer, by means of an improvement of the bidrawing rate, passing from the general factor 10 to another largely superior, at least in 30 %.

To achieve this are provided conventional test, physical, (of diverse strengths, joined among others, to their handling and to the lay-up during their storage), dimensional (joined to their thermal stability) and of the evaluation of carbonic gas loss, these based on complex functions which includes not only the gas tightness but also the expansion originated by the pressure, the PET gas absorption, as well as the storage life-time, the wall thickness and the surface/volume relation of the container.

Complementarily, the use of a laser operating Raman spectrometer is available, adjusting the frequency to that of the PET and the energy to the wall thickness of each preform sample to be analysed, in indirect determination according to the emergent wave.

From the various physico-chemical tests and from other of the destructive type, as well as especially from the spectrometric measurements, it is observed that from the intervening cohesion forces, the Van der Waals intermolecular have less specific weight than the interatomic acting among the macromolecules of the polymer, which shall be those which facilitate that important necessary increase of factor 10.

The diverse preforms were conventionally constructed slightly frusto-conical and a diversity of critical diameters were determined, internal and external, which ensure that the PET drawing limit is not exceeded, which would cause loss of strength and appearance of whitish zones, especially on the petal zone of the base, obtaining partial volumes, both of the cavity and of the stem of the preform and determining separately, the weight of the mouth, identical for all of them and of 5,0 g.

Said volumes parting from a total of four pairs of diameters : the exterior diameters (1) and the interior diameters (1') of the preform correspond to the expansion zone of the base of five petals, whilst the corresponding diameters (2) and (2') define the start of the body of the bottle, diameters (3) and (3') define the end of the transition zone of the neck and diameters (4) and (4') the start of the same, and also the exterior (4) is made to coincide with the external, bottom conventional projection of the mouth, for the support of the preform during its transportation.

For this 2 l container, the respective exterior diameters are in mm, of : 27,4 (1), 28,3 (2), 25,5 (3) and 26,0 (4), whilst the corresponding interiors are of : 19,2 (1'), 20,1 (2'), 21,6 (3') and 21,6 (4') which, for a PET density of 1,335 kg/dm3, provide the weight of 47 g. The wall thickness reaches 4,1 mm during the injection period of 20 - 21 s, based on the type of mold and on the total length 146 mm, the half-perimeter of bottle being in 415,0 mm and its wall thickness being 0,27 mm.

From the analysis of the different preforms and from the containers resulting from their blowing, a variation in the molecular lattice of the polymer is deduced, which decreases the length of the long side of the rectangle of the same (in longitudinal position, in the container) without considerably increasing the dimension of the short side (axial, in the container), until a rate value is reached which is near to 13,44, corresponding to a preform with a diametral ratio of 4,2 and an axial ratio of 3,2, with a total weight of the same of 52 g and with gas loss curves equivalent to those of the standard container of 54,5 g.

If it is considered that the molecular biorientation of the polymer does not affect the mouth of the bottle and the 5,0 g in weight of the same are subtracted, a minimum relative weight lightening is in fact reached with this optimization ( 42,02 versus 49,5 ) of the 4,14 %, which may reach 11,85 % in the most favourable case.

To avoid undesired crystallization effect which might decrease the strength of the container up to 30 % (for example, in the lay-up direction), the work temperature ranges during the drawing-blowing of the preforms in order to obtain the desired bottles, is defined between 100 and 105 °C, and once this is set, it is maintained for all the preforms of the production with a maximum variation of 1 %, by means of a correction propitiated by an infrared camera, reinforcing and equalizing more this number of the bidrawing rate in all the series.

This optimization is extrapolable to any preform and any container, permitting the obtention of weight reductions parting from an appropriate redesign of the preform, which pursuits the obtention of biorientation ratios such as those previously described and which, together with an appropriate blowing temperature profile, shall result in bottles with the quality required by the client.

Likewise defined is the inclusion among the design parameters, of the objection of maintaining a wall thickness which does not exceed 4,1 mm to ensure appropriate injection and blowing times.

This description is not made more extensive with the understanding that any expert in the Art shall have sufficient information to comprehend the scope of the invention and its derived advantages, as well as how to proceed to reproduce the same.

It is to be understood that, if the essentiality of the invention is not altered, both the variations in the materials as in the shape, the size and the arrangement of the elements are capable of variation characterized within the same.

The terms used during the description and the meaning of the same shall always be considered in a non limitative manner.

## Claims

1. Optimization procedure of preforms, of preforms injected with thermoplastic material, preferable esters, which are blown for the obtention of containers which, essentially, are characterized in that they couple their reduction in weight to an increase in the order of, or above 30 % of the conventional bidrawing rate, with a reduction of the standard conventional weight and a variation of their diametral and axial ratios, modifying the PET molecular lattice of the container.

2. Optimization procedure of preforms, according to the previous claim, characterized in that the lattice generated during the drawing-blowing of the preform is transformed from the conventional rectangular configuration to another which is more squared, being responsible for said improvement of the bidrawing rate by a cohesion increase of the interatomic forces acting among the macromolecules of the polymer.

3. Optimization procedure of preforms, according to the previous claims, characterized in that it maintains the carbonic tightness.

4. Optimization procedure of preforms, according to the previous claims, characterized in that it determines a diversity of critical diameters, internal and external, which ensure that the PET drawing limit is not exceeded, which would result in a loss of strength and the appearance of whitish zones, especially on the petal zones of the base.

5. Optimization procedure of preforms, according to the previous claims, characterized in that it includes, among the design parameters, the objective of maintaining a wall thickness which does not exceed 4,1 mm, to ensure appropriate injection and blowing times.

6. Lightened preforms, according to the previous claims, characterized in that they provide the exterior (1) and interior (1') diameters of the preform in correspondence to the expansion zone of the base with five petals, whilst diameters (2) and (2') define the start of the body of the bottle, diameters (3) and (3') define the end of the straight zone of the neck and diameters (4) and (4') the start of this straight zone and the exterior (4), the supporting base of the preform during its transportation.

**Amended claims under Art 19.1 PCT**

[received by the International Office on the 27 of October, 1997 (27.10.97); claims 1, 4 and 6 modified; the other claims unchanged (2 pages)]

1. Optimization procedure of preforms, of preforms injected with polyethylene terephthalate (PET), which is blown for the obtention of containers which, essentially, are characterized by coupling the decrease in weight to an increase in the bidrawing rate which could reach 30 % of the conventional one, with a standard conventional weight reduction and variation of its diametral and axial ratios, modifying the molecular lattice of the PET of a the container.

2. Optimization procedure of preforms, according to the previous claim, characterized in that the lattice generated during the drawing-blowing of the preform is transformed from the conventional rectangular configuration to another which is more squared, being responsible for said improvement of the bidrawing rate by a cohesion increase of the interatomic forces acting among the macromolecules of the polymer.

3. Optimization procedure of preforms, according to the previous claims, characterized in that it maintains the carbonic tightness.

4. Optimization procedure of preforms, according to the previous claims, characterized in that it determines a diversity of critical diameters, internal and external, which ensure that the PET drawing limit is not exceeded, established in a limit ratio of 5,20, which would result in loss of strength and the appearance of whitish zones, especially in the petal zone of the base.

5. Optimization procedure of preforms, according to the previous claims, characterized in that it includes, among the design parameters, the objective of maintaining a wall thickness which does not exceed 4,1 mm, to ensure appropriate injection and blowing times.

6. Lightened preforms, according to the previous claims, characterized in that they provide the exterior (1) and interior (1') diameters of the preform in correspondance with the expansion zone of the base with five petals, whilst diameters (2) and (2') define the start of the body of the bottle, diameters (3) and (3') define the end of the straight zone of the neck and diameters (4) and (4') the start of this straight zone and the exterior (4), the supporting base of the preform during its transportation, with a diametral ratio of 4,2 (D : d, being $d = d_1 + d_2$) and an axial ratio of 3,2 (L : l), as well as with a total weight of the same of 52 g and with gas loss curves equivalent to those of the standard container of 54,5 g.

FIG.1

FIG. 2

| INTERNATIONAL SEARCH REPORT | International Application No. PCT/ES 96/00236 |
| --- | --- |

**A. CLASSIFICATION OF SUBJECT MATTER**
IPC 6   B29C49/00   B29C49/08

According to International Patent Classification (IPC) or to both national classification and IPC

**B. FIELDS SEARCHED**

Minimum documentation searched (classification system followed by classification symbols)
IPC 6   B29C

Documentation searched other than minimum documentation to the extent that such documents are included in the fields searched

Electronic data base consulted during the international search (name of data base and, where practical, search terms used)

**C. DOCUMENTS CONSIDERED TO BE RELEVANT**

| Category * | Citation of document, with indication, where appropriate, of the relevant passages | Relevant to claim No. |
| --- | --- | --- |
| X | EP 0 383 324 A (MITSUI PETROCHEMICAL IND) 22 August 1990 see page 4, line 1 - line 37; figures see page 5, line 43 - line 45 see page 6, line 46 - line 49 --- | 1-5 |
| X | WO 96 24482 A (DTL MONOFOOT LIMITED PARTNERSH) 15 August 1996 see page 3, line 19 - page 4, line 2 see page 15, line 12 - line 20 see page 23 - page 27 --- | 1-6 |
| A | US 4 910 054 A (COLLETTE WAYNE N  ET AL) 20 March 1990 see column 3, line 58 - column 4, line 9; figures --- | 1-6 |

-/--

| [X] Further documents are listed in the continuation of box C. | [X] Patent family members are listed in annex. |
| --- | --- |

* Special categories of cited documents :

"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art.
"&" document member of the same patent family

| Date of the actual completion of the international search | Date of mailing of the international search report |
| --- | --- |
| 4 July 1997 | 30. 07. 97 |

| Name and mailing address of the ISA European Patent Office, P.B. 5818 Patentlaan 2 NL - 2280 HV Rijswijk Tel. (+31-70) 340-2040, Tx. 31 651 epo nl, Fax: (+31-70) 340-3016 | Authorized officer KOSICKI, T |
| --- | --- |

Form PCT/ISA/210 (second sheet) (July 1992)

## INTERNATIONAL SEARCH REPORT

International Application No.
PCT/ES 96/00236

C.(Continuation) DOCUMENTS CONSIDERED TO BE RELEVANT

| Category * | Citation of document, with indication, where appropriate, of the relevant passages | Relevant to claim No. |
|---|---|---|
| A | WO 96 33062 A (COCA COLA CO ;BREWSTER GARY (US); STEELE SCOTT W (US); MUKHERJEE S) 24 October 1996<br>see page 3, line 24 - line 29; figures<br>----- | 1-6 |

Form PCT-ISA/210 (continuation of second sheet) (July 1992)